# EUROPÄISCHE PATENTSCHRIFT

(11) **EP 2 700 337 B1**
(45) Veröffentlichungstag und Bekanntmachung des Hinweises auf die Patenterteilung: **29.06.2016**
(21) Anmeldenummer: 13178516.4
(22) Anmeldetag: 30.07.2013
(51) Int. Cl.: A47J 31/06

(54) **Kaffeemaschine**
Coffee machine
Machine à café

(30) Priorität: 21.08.2012 DE 202012103158 U
(43) Veröffentlichungstag der Anmeldung: 26.02.2014
(73) Patentinhaber: Melitta Europa GmbH & Co. KG, 32427 Minden (DE)
(72) Erfinder: Sachtleben, Andreas, 32427 Minden (DE)
(74) Vertreter: Dantz, Jan Henning

(56) Entgegenhaltungen:
- EP-B1- 0 655 213
- CH-A5- 616 064
- DE-A1- 10 335 824
- DE-A1-102008 023 462
- DE-U1- 8 815 832

## Beschreibung

Die vorliegende Erfindung betrifft eine Kaffeemaschine mit einem Filterhalter, in den ein Filter zum Befüllen mit Kaffeemehl einsetzbar ist, und einem Halter für den Filterhalter, an dem der Filterhalter lösbar fixiert werden kann, wobei in der fixierten Position des Filterhalters ein mit Kaffee befüllbarer Behälter unter einem Auslass des Filterhalters angeordnet ist.

Es sind Kaffeemaschinen bekannt, bei denen eine Brüheinheit heißes Wasser in einen Filterhalter einleitet, in dem ein Filterpapiereinsatz mit Kaffeemehl angeordnet ist. Am Boden des Filterhalters ist ein Auslass vorgesehen, damit der gebrühte Kaffee in einen unter dem Filterhalter angeordneten Behälter eingefüllt wird. Der Filterhalter ist dabei meist in eine Führung einschiebbar, die an einem oberen Rand des Filterhalters angeordnet ist. Zum Wechseln des Filters muss dann zunächst der Filterhalter aus dem Einfüllbereich für heißes Wasser entfernt werden und kann dann für die Entsorgung des verbrauchten Filterpapiereinsatzes frei bewegt werden. Für das Herausnehmen des Filterhalters sind somit zahlreiche Schritte durchzuführen, was als mühsam empfunden wird. Zudem besteht das Problem, dass der Filterhalter in einer eindeutigen Position oberhalb des Behälters positioniert werden muss, damit sichergestellt ist, dass der Behälter auch unterhalb des Auslasses angeordnet ist. Gerade wenn am Auslass ein verschließbares Ventil vorgesehen ist, muss der Behälter relativ zu dem Filterhalter exakt positioniert sein. Viele Kaffeemaschinen bieten keine Sicherheit gegen eine Fehlpositionierung für den Filterhalter.
Die EP 0 655 213 B1 offenbart einen Filterhalter, der durch Nocken, die auf einem Filterhalter-Absetzbügel angebracht sind, gesichert ist, indem Aussparungen, die an dem Filterhalter angeordnet sind, die in die Nocken eingreifen. Dabei ist der Filterhalter vor allem in vertikaler Richtung auf dem Absetzbügel gesichert.
DE 103 35 824 A1 offenbart eine Arretiervorrichtung für einen Filterhalter, der an dem Gehäuse schwenkbar und arretiert ist Dafür ist ein Durchbruch mit einem Federelement an dem Gehäuse vorgesehen und ein Haken an dem Filterhalter soll in den Durchbruch einrasten.

Es ist daher Aufgabe der vorliegenden Erfindung, eine Kaffeemaschine zu schaffen, bei der ein einfaches Entnehmen und Einfügen des Filterhalters möglich ist und zudem eine exakte Positionierung des Filterhalters gewährleistet wird.

Diese Aufgabe wird mit einer Kaffeemaschine mit den Merkmalen des Anspruches 1 gelöst.

Erfindungsgemäß ist der Filterhalter lösbar an dem Halter der Kaffeemaschine fixierbar, wobei der Filterhalter an dem Halter über einen Verriegelungsmechanismus verriegelbar ist. Über den Verriegelungsmechanismus kann eine exakte Positionierung des Filterhalters in dem Halter gewährleistet werden, wobei bei einer Entriegelung des Verriegelungsmechanismus ein einfaches Abziehen des Filterhalters die Demontage und Montage erleichtert.

Gemäß einer bevorzugten Ausgestaltung der Erfindung ist der Filterhalter in der verriegelten Position gegen ein Abziehen von dem Halter gesichert. Dies vermeidet Fehlbetätigungen und verhindert eine unbeabsichtigte Bewegung des Filterhalters während des Brühvorganges. Um den Filterhalter zu entriegeln, ist ein Betätigungselement vorgesehen, das vom Benutzer bei einer Demontage betätigt wird.

Der Verriegelungsmechanismus weist vorzugsweise mindestens einen bewegbaren Riegel auf, der an dem Halter verriegelbar ist. Der mindestens eine Riegel kann dabei über eine Feder in die Verriegelungsposition vorgespannt sein, so dass ein einfaches Verrasten des Riegels beim Anbringen des Filterhalters an dem Halter erfolgt Es können dabei zwei Riegel vorgesehen sein, die über die Feder in gegenüberliegende Richtungen vorgespannt sind, so dass eine stabile Verriegelung des Filterhalters an dem Halter erhalten wird.

Für eine einfache Betätigung weist der Filterhalter einen Griff auf, an dem das Betätigungselement angeordnet ist. Dadurch ist es möglich, eine Einhandbetätigung vorzusehen, wobei der Filterhalter mit einer Hand gegriffen und gleichzeitig das Betätigungselement ausgelöst wird. Auf diese Weise kann der Benutzer mit einer Hand den Filterhalter aus der Kaffeemaschine entnehmen.

Gemäß einer weiteren Ausgestaltung der Erfindung ist der Halter für den Filterhalter im unteren Bereich des Filterhalters benachbart zu dem Auslass angeordnet. Dadurch ist eine besonders exakte Positionierung möglich, da der Halter benachbart zu dem Auslass für eine Positionierung des Filterhalters sorgt, was gerade beim Einsatz eines Ventils am Auslass für eine hohe Funktionssicherheit sorgt. Es wäre auch möglich, den Halter für den Filterhalter an einem oberen Rand des Filterhalters vorzusehen, wobei die Anordnung am unteren Ende des Filterhalters für einen besonders kompakten Aufbau sorgt. Der Halter kann dabei als Haltebalken ausgebildet sein, der im Wesentlichen horizontal von einem Körper der Kaffeemaschine horizontal hervorsteht. Der Haltebalken kann dabei eine V-förmige Aufnahme für einen Vorsprung an dem Filterbalken aufweisen, wobei der Filterbalken in die V-förmige Aufnahme unter Verrastung des Verriegelungsmechanismus einschiebbar ist.

Der Filterhalter weist vorzugsweise bodenseitig einen hervorstehenden Rand auf, der auf einer ebenen Oberfläche standfest abstellbar ist. Der Rand steht dabei so an der Unterseite des Filterhalters so hervor, dass ein Abstellen ermöglicht wird, was die Handhabung vereinfacht. Zudem kann innerhalb des Randes der Verriegelungsmechanismus angeordnet werden, so dass die Mechanik des Verriegelungsmechanismus von außen nicht sichtbar ist.

Für einen Aufbau des Verriegelungsmechanismus mit nur wenigen Bauteilen ist das Betätigungselement vorzugsweise integral mit mindestens einem Riegel ausgebildet. Der Riegel kann dabei verschwenkbar an dem Filterhalter gelagert sein. Das Betätigungselement kann über einen oder mehrere biegbare Stege mit dem mindestens einen Riegel verbunden sein, so dass bei einem Verschieben des Betätigungselementes der Riegel entsprechend aus der Verriegelungsposition gelöst wird.

Die Erfindung wird nachfolgend anhand eines Ausführungsbeispiels mit Bezug auf die beigefügten Zeichnungen näher erläutert. Es zeigen:

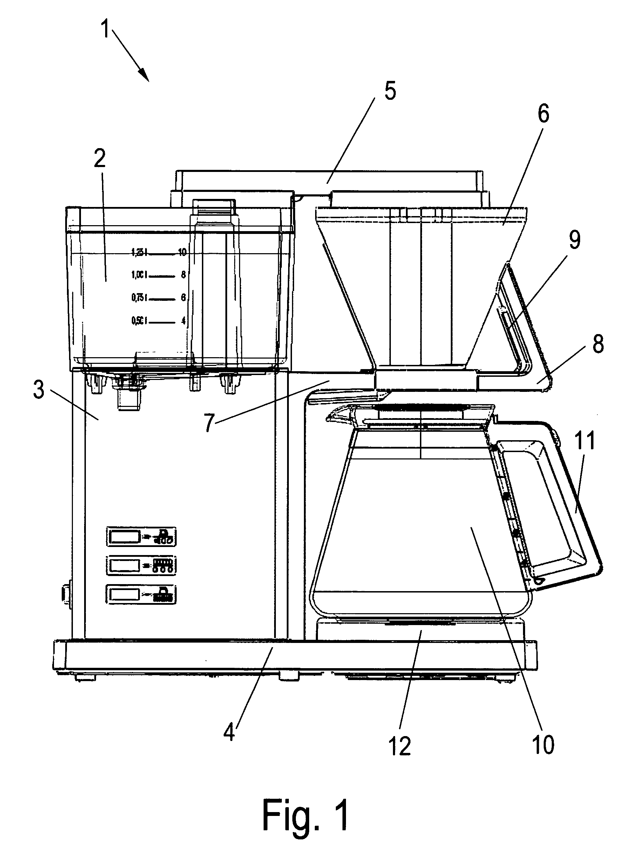

- Figur 1: eine Seitenansicht einer erfindungsgemäßen Kaffeemaschine;
- Figur 2: eine vergrößerte Ansicht des Filterhalters der Kaffeemaschine der Figur 1;
- Figur 3: eine perspektivische Ansicht des Verriegelungsmechanismus des Filterhalters der Figur 2;
- Figur 4: eine perspektivische Unteransicht des Filterhalters in der montierten Position;
- Figur 5: eine Unteransicht des Filterhalters ohne Verriegelungsmechanismus bei der Montage;
- Figuren 6 und 7: zwei Ansichten des Verriegelungsmechanismus des Filterhalters in unterschiedlichen Positionen, und
- Figur 8: eine Detailansicht des Verriegelungsmechanismus des Filterhalters.

Eine Kaffeemaschine 1 umfasst einen Wassertank 2, der auf einer Einheit 3 mit einer Steuereinrichtung und einer Heizeinrichtung zum Erwärmen des Wassers sowie einer Pumpe und entsprechenden Schaltern ausgerüstet ist. Die Einheit 3 ist auf einer Bodenplatte 4 angeordnet.

An der Oberseite der Kaffeemaschine 1 ist eine horizontal hervorstehende Leitung 5 vorgesehen, mittels der heißes Wasser in einen Filterhalter 6 eingeleitet werden kann. In dem Filterhalter 6 kann ein Filter, beispielsweise ein Filterpapiereinsatz mit Kaffeemehl, angeordnet werden, wobei der Filterhalter 6 über einen Halter 7 an der Kaffeemaschine 1 lösbar fixiert ist. Der Filterhalter 6 weist einen bügelförmigen Griff 8 mit einem Betätigungselement 9 auf. Unterhalb des Filterhalters 6 ist ein Behälter 10, insbesondere eine Glaskanne, mit einem Griffabschnitt 11 vorgesehen, die auf einer Heizplatte 12 an der Bodenplatte 4 abgestellt ist.

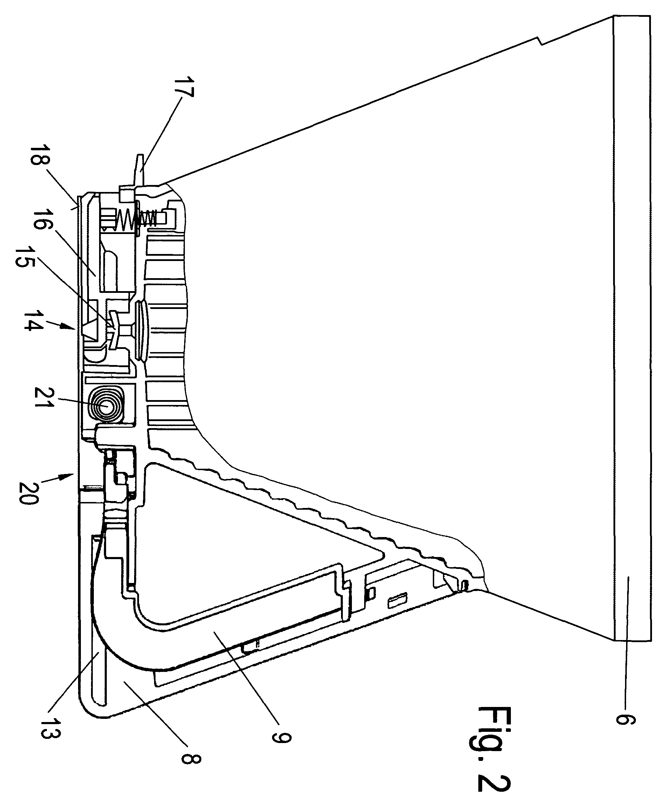

In Figur 2 ist der Filterhalter 6 im Detail dargestellt. An dem Griff 8 sind ein oder mehrere Führungselemente 13 in Form von Nuten oder Rippen vorgesehen, um das Betätigungselement 9 verschiebbar an dem Griff 8 zu lagern.

Der Filterhalter 6 verjüngt sich zum unteren Ende keilförmig oder kegelstumpfförmig und weist einen Auslass 14 am unteren Ende auf, der über ein Ventil 15 verschließbar ist. Das Ventil 15 ist über einen Hebel 16 zu öffnen, der verschwenkt wird, wenn der Behälter 10 unter den Filterhalter 6 eingeschoben wird.

An dem Filterhalter 6 ist ein im Wesentlichen horizontaler äußerer Filterteller 17 ausgebildet, der eine Öffnung aufweist, die dazu dient, im Falle eines Überlaufes, den Kaffee in die Kanne zu leiten. Hierfür können an der Außenseite des Filterhalters 6 entsprechende Leiteinrichtungen und eine Überlauföffnung ausgebildet sein. Der Filterhalter 6 ist an seiner Unterseite 18 eben ausgebildet und kann auf eine ebene Oberfläche standfest abgestellt werden.

Im unteren Bereich des Filterhalters 6 ist ferner ein Verriegelungsmechanismus 20 vorgesehen, der benachbart zu dem Auslass 14 angeordnet ist. Der Verriegelungsmechanismus 20 umfasst zwei Riegel 21, die an dem Halter 7 verriegelbar sind.

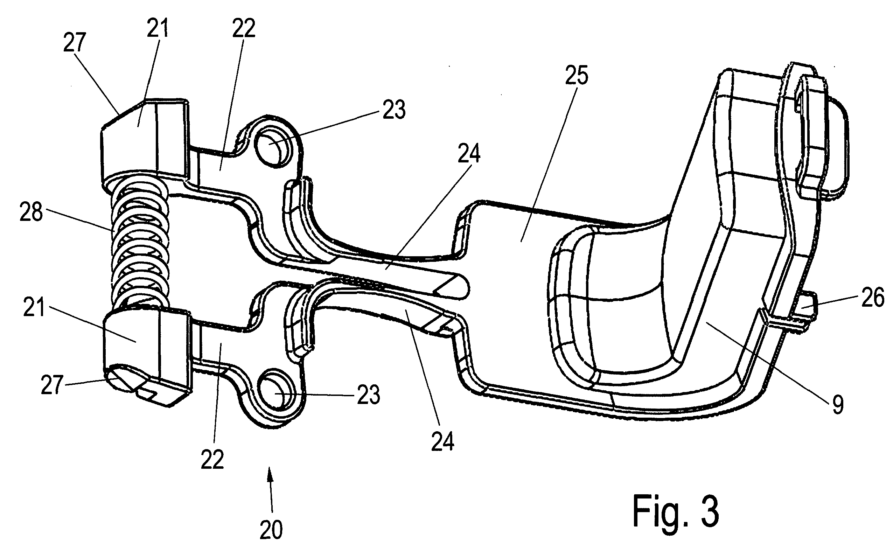

In Figur 3 ist der Verriegelungsmechanismus 20 zusammen mit dem Betätigungselement 9 gezeigt. Das Betätigungselement 9 ist aus Kunststoff hergestellt und integral mit den beiden Riegeln 21 verbunden. Die Riegel 21 sind an einem Hebel 22 angeformt, der eine Öffnung 23 zum Einfügen einer Achse an dem Filterhalter 6 aufweist. Der Hebel 22 ist ferner über einen biegbaren Steg 24 mit einem plattenförmigen Abschnitt 25 des Betätigungselementes 9 verbunden. An dem Betätigungselement 9 sind ein oder mehrere Führungselemente 26 ausgebildet, die mit Führungselementen an dem Griff 8 zusammenwirken, um das Betätigungselement 9 verschiebbar an dem Griff 8 zu lagern.

Die beiden Riegel 21 sind über eine Feder 28 nach außen vorgespannt, wobei an der Außenseite der Riegel 21 eine Anlaufschräge 27 ausgebildet ist, um die Riegel 21 beim Einschieben in den Halter 7 zusammenzudrücken.

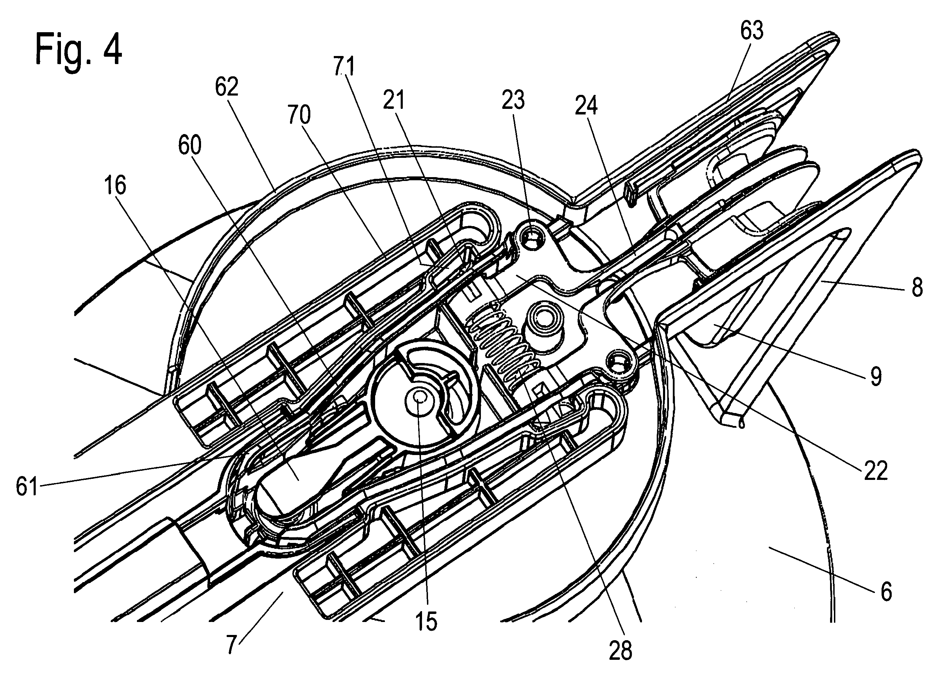

In Figur 4 ist der Filterhalter 6 in der am Halter 7 montierten Position gezeigt. Die Öffnungen 23 sind drehbar an dem Filterhalter 6 gelagert und die Riegel 21 werden durch die Feder 28 nach außen gedrückt und durchgreifen dabei einen Rand 60 an der Unterseite des Filterhalters 6. Der Rand 60 läuft keilförmig zusammen und umfasst eine Spitze 61, wobei der Rand 60 und die Spitze 61 in eine im Wesentlichen V-förmige Aufnahme an dem balkenförmigen Halter 7 einschiebbar sind. Ferner ist das Ventil 15 zu erkennen, das über den Hebel 16 betätigbar ist.

In der verriegelten Position greifen die Riegel 21 in Aufnahmen an dem Halter 7 ein, so dass der Filterhalter 6 gegen ein Abziehen von dem Halter 7 gesichert ist.

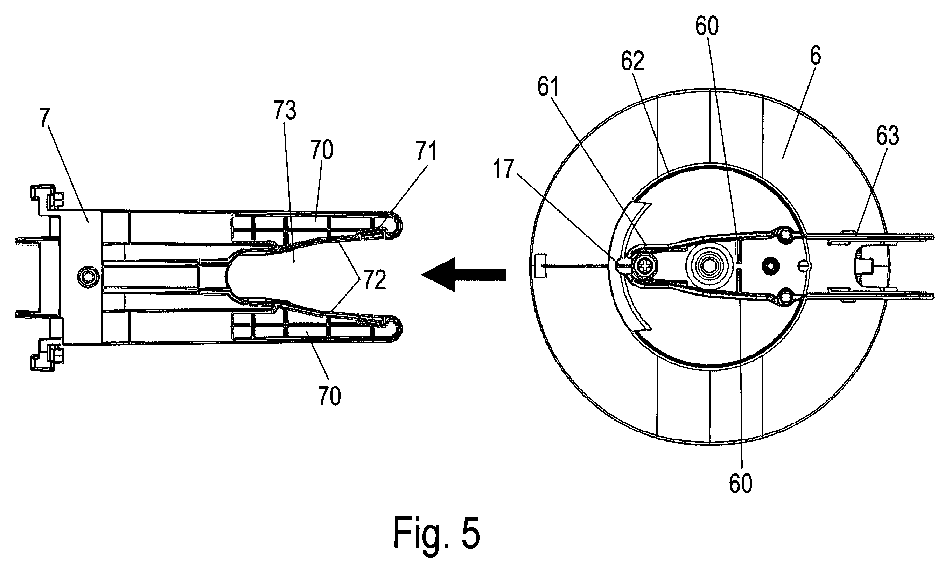

Die Montage des Filterhalters 6 ohne den Verriegelungsmechanismus ist in Figur 5 gezeigt. Der Halter 7 ist als Haltebalken ausgebildet, der eine im Wesentlichen V-förmige Aufnahme 73 aufweist, die von zwei Schenkeln 70 umgeben ist. An jedem Schenkel 70 ist an der Innenseite eine Aufnahme 71 für einen Riegel 21 ausgebildet. Die V-förmige Aufnahme 73 umfasst Innenwände 72, die einen Rand 60 an der Unterseite des Filterhalters 6 sowie die Spitze 61 umgeben. Der Filterhalter 6 umfasst zusätzlich einen ringförmigen äußeren Rand 62 im unteren Bereich, der sich bis zu zwei Stegen 63 erstreckt, die an der Unterseite des Griffes 8 ausgebildet sind. Der Rand 60, die Spitze 61, der Rand 62 sowie die Stege 63 sind so ausgebildet, dass sie eine ebene untere Auflagefläche für den Filterhalter 6 ausbilden.

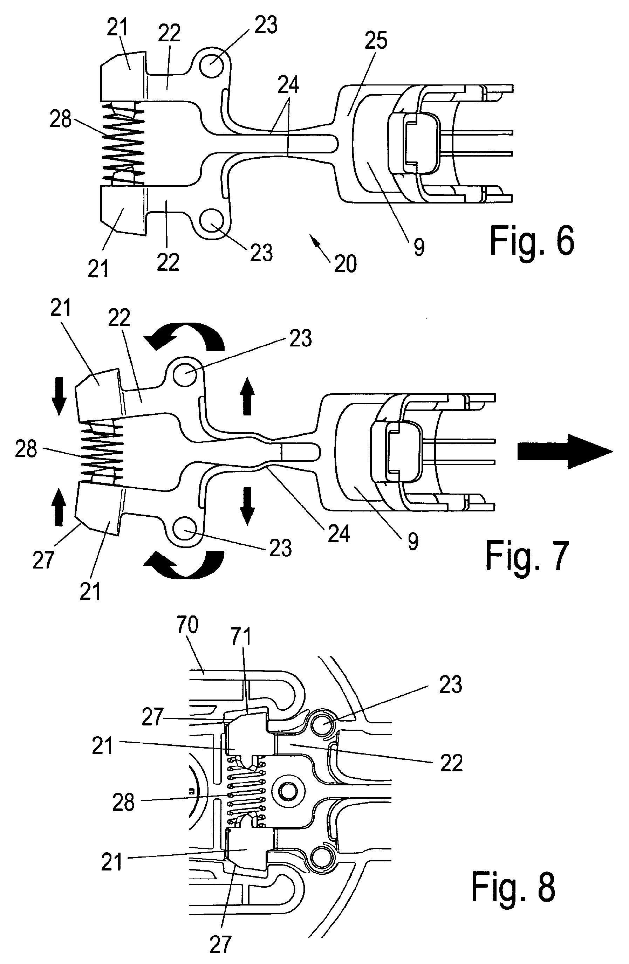

In den Figuren 6 und 7 ist der Verriegelungsmechanismus 20 des Filterhalters 6 im Detail gezeigt. In Figur 6 ist der Verriegelungsmechanismus in der Verriegelungsposition gezeigt, bei der die Feder 28 die Riegel 21 nach außen drückt. Wird nun das Betätigungselement 9 zu dem Griff 8 hingezogen, wird die in Figur 7 gezeigte Position erreicht. Durch das Ziehen des Betätigungselementes 9 nach rechts in Figur 7 werden auch die Stege 24 entsprechend verschoben, wodurch der Hebel 22 um die Achse in der Öffnung 23 verschwenkt. Durch das Verschwenken der Hebel 22 werden die Riegel 21 gegen die Kraft der Feder 28 nach innen gedrückt und gelangen somit außer Eingriff von den Aufnahmen 71 an dem Halter 7. Der Filterhalter 6 kann nun ohne Widerstand von dem Halter 7 abgezogen werden, um einen Filter für Kaffeemehl zu wechseln. Danach kann der Filterhalter 6 wieder in den Halter 7 eingeschoben werden, wobei dann das Betätigungselement 9 wahlweise angezogen werden kann, um die Riegel 21 zusammenzudrücken, oder beim Einschieben des Filterhalters 6 gelangen die Anlaufschrägen 27 an den Riegeln in Eingriff mit den Schenkeln 70 des Halters 7 und werden dadurch zusammengedrückt. Dann kann beim Einschieben des Filterhalters 6 ein Verrasten der Riegel 21 in den Aufnahmen 71 erfolgen.

In Figur 8 ist die Verriegelungsposition der Riegel 21 im Detail dargestellt. Die Riegel 21 werden über die Feder 28 in die Aufnahmen 71 gedrückt, so dass ein Abziehen des Filterhalters 6 verhindert wird. Durch die Vorsehung von zwei Riegeln 21 können dabei Toleranzen ausgeglichen werden, die zwangsläufig vorhanden sind.

In dem gezeigten Ausführungsbeispiel sind zwei Riegel 21 zum Verriegeln des Filterhalters 6 an dem Halter 7 vorgesehen. Es ist natürlich auch möglich, nur einen Riegel 21 oder mehr als zwei Riegel 21 vorzusehen. Ferner kann das Betätigungselement 9 statt durch eine Schiebebewegung auch durch andere Mechaniken ein Entriegeln oder Verriegeln bewirken. Zudem können für die Verriegelungsmechanismen auch mehrere Bauteile und andere Verriegelungsmechaniken eingesetzt werden.

### Bezugszeichenliste

- 1: Kaffeemaschine
- 2: Wassertank
- 3: Einheit
- 4: Bodenplatte
- 5: Leitung
- 6: Filterhalter
- 7: Halter
- 8: Griff
- 9: Betätigungselement
- 10: Behälter
- 11: Griffabschnitt
- 12: Heizplatte
- 13: Führungselement
- 14: Auslass
- 15: Ventil
- 16: Hebel
- 17: Filterteller
- 18: Unterseite
- 20: Verriegelungsmechanismus
- 21: Riegel
- 22: Hebel
- 23: Öffnung
- 24: Steg
- 25: Abschnitt
- 26: Führungselement
- 27: Anlaufschräge
- 28: Feder
- 60: Rand
- 61: Spitze
- 62: Rand
- 63: Steg
- 70: Schenkel
- 71: Aufnahme
- 72: Innenwand
- 73: Aufnahme

## Patentansprüche

1. Kaffeemaschine (1), mit einem Filterhalter (6), in den ein Filter zum Befüllen mit Kaffeemehl einsetzbar ist, und einem Halter (7) für den Filterhalter (6), an dem der Filterhalter (6) lösbar fixiert werden kann, wobei in der fixierten Position des Filterhalters (6) ein mit Kaffee befüllbarer Behälter (10) unter einem Auslass (14) des Filterhalters (6) angeordnet ist, und der Filterhalter (6) an dem Halter (7) über einen Verriegelungsmechanismus (20) verriegelbar ist, **dadurch gekennzeichnet, dass** ein Betätigungselement (9) vorgesehen ist, um den Filterhalter (6) zu entriegeln.

2. Kaffeemaschine nach Anspruch 1, **dadurch gekennzeichnet, dass** der Filterhalter (6) in der verriegelten Position gegen ein Abziehen von dem Halter (7) gesichert ist.

3. Kaffeemaschine nach einem der vorhergehenden Ansprüche, **dadurch gekennzeichnet, dass** der Verriegelungsmechanismus (20) mindestens einen bewegbaren Riegel (21) aufweist, der an dem Halter (7) verriegelbar ist.

4. Kaffeemaschine nach Anspruch 3, **dadurch gekennzeichnet, dass** der mindestens eine Riegel (21) über eine Feder (28) in die Verriegelungsposition vorgespannt ist.

5. Kaffeemaschine nach einem der vorhergehenden Ansprüche, **dadurch gekennzeichnet, dass** der Filterhalter (6) einen Griff (8) aufweist, an dem das Betätigungselement (9) angeordnet ist.

6. Kaffeemaschine nach einem der vorhergehenden Ansprüche, **dadurch gekennzeichnet, dass** der Halter (7) für den Filterhalter (6) im unteren Bereich des Filterhalters (6) benachbart zu dem Auslass() angeordnet ist.

7. Kaffeemaschine nach einem der vorhergehenden Ansprüche, **dadurch gekennzeichnet, dass** der Halter (7) als Haltebalken ausgebildet ist, an dem der Filterhalter (6) verriegelbar ist.

8. Kaffeemaschine nach Anspruch 7, **dadurch gekennzeichnet, dass** der Haltebalken eine im Wesentlichen V-förmige Aufnahme (73) für einen Vorsprung (60, 61) an dem Filterhalter (6) aufweist.

9. Kaffeemaschine nach Anspruch 8, **dadurch gekennzeichnet, dass** der Vorsprung (60, 61) an dem Filterhalter (6) in die V-förmige Aufnahme (73) unter Verrastung des Verriegelungsmechanismus (20) einschiebbar ist.

10. Kaffeemaschine nach einem der vorhergehenden Ansprüche, **dadurch gekennzeichnet, dass** der Filterhalter (6) bodenseitig einen hervorstehenden Rand (60, 61, 62, 63) aufweist, der auf einer ebenen Oberfläche standfest abstellbar ist.

11. Kaffeemaschine nach einem der vorhergehenden Ansprüche, **dadurch gekennzeichnet, dass** das Betätigungselement (9) integral mit mindestens einem Riegel (21) des Verriegelungsmechanismus (20) ausgebildet ist.

12. Kaffeemaschine nach einem der vorhergehenden Ansprüche, **dadurch gekennzeichnet, dass** der mindestens eine Riegel (21) verschwenkbar an dem Filterhalter (6) gelagert ist.

13. Kaffeemaschine nach einem der vorhergehenden Ansprüche, **dadurch gekennzeichnet, dass** das Betätigungselement (9) über mindestens einen biegbaren Steg (24) mit dem mindestens einen Riegel (21) verbunden ist.

14. Kaffeemaschine nach einem der vorhergehenden Ansprüche, **dadurch gekennzeichnet, dass** an dem Filterhalter (6) am Auslass (14) ein verschließbares Ventil (15) vorgesehen ist.

## Claims

1. Coffee machine (1) with a filter holder (6) in which a filter for filling with coffee grinds is insertable, and a mount (7) for the filter holder (6), to which the filter holder (6) can be detachably fixed, wherein in the fixed position of the filter holder (6) a container (10) fillable with coffee is arranged under an outlet (14) of the filter holder (6) and the filter holder (6) is lockable to the mount (7) by way of a locking mechanism (20), **characterised in that** an actuating element (9) for unlocking the filter holder (6) is provided.

2. Coffee machine according to claim 1, **characterised in that** the filter holder (6) is secured in the locked position against withdrawn from the mount (7).

3. Coffee machine according to one of the preceding claims, **characterised in that** locking mechanism (20) comprises at least one movable locking member (21) which is lockable to the mount (7).

4. Coffee machine according to claim 3, **characterised in that** the at least one locking member (21) is biased into the locking position by way of a spring (28).

5. Coffee machine according to any one of the preceding claims, **characterised in that** the filter holder (6) has a handle (8) at which the actuating element (9) is arranged.

6. Coffee machine according to any one of the preceding claims, **characterised in that** the mount (7) for the filter holder (6) is arranged in the lower region of the filter holder (6) adjacent to the outlet (14).

7. Coffee machine according to any one of the preceding claims, **characterised in that** the mount (7) is constructed as a mounting bar to which the filter holder (6) is lockable.

8. Coffee machine according to claim 7, **characterised in that** the mounting bar has a substantially V-shaped receptacle (73) for a projection (60, 61) at the filter holder (6).

9. Coffee machine according to claim 8, **characterised in that** the projection (60, 61) at the filter holder (6) can be pushed into the V-shaped receptacle (73) with detenting of the locking mechanism (20).

10. Coffee machine according to any one of the preceding claims, **characterised in that** the filter holder (6) has at the base a projecting edge (60, 61, 62, 63) which is stably placeable on a flat surface.

11. Coffee machine according to any one of the preceding claims, **characterised in that** the actuating element (9) is integrally formed with at least one locking member (21) of the locking mechanism (20).

12. Coffee machine according to any one of the preceding claims, **characterised in that** the at least one locking member (21) is pivotably mounted on the filter holder (6).

13. Coffee machine according to any one of the preceding claims, **characterised in that** the actuating element (9) is connected with the at least one locking member (21) by way of at least one bendable web (24).

14. Coffee machine according to any one of the preceding claims, **characterised in that** a closable valve (15) is provided at the filter holder (6) at the outlet (14).

## Revendications

1. Machine à café (1) équipée d'un porte-filtre (6) dans lequel peut être logé un filtre destiné à être rempli de café moulu, ainsi qu'un support (7) du porte-filtre (6) sur lequel le porte-filtre (6) peut être fixé de manière amovible, machine à café dans laquelle, lorsque le porte-filtre (6) est fixé, un récipient (10) pouvant être rempli de café est positionné au-dessous d'une sortie (14) du porte-filtre (6), et le porte-filtre (6) peut être verrouillé sur le support (7) par un mécanisme de verrouillage (20),
**caractérisé en ce qu'**
il est prévu un élément d'actionnement (9) pour permettre de déverrouiller le porte-filtre (6).

2. Machine à café conforme à la revendication 1,
**caractérisée en ce que**
dans la position verrouillée, le porte-filtre (6) est bloqué pour empêcher son extraction du support (7).

3. Machine à café conforme à l'une des revendications précédentes,
**caractérisée en ce que**
le mécanisme de verrouillage (20) comporte au moins un verrou mobile (21) pouvant être verrouillé sur le support (7).

4. Machine à café conforme à la revendication 3,
**caractérisée en ce que**
le verrou (21) est précontraint par un ressort (28) dans la position de verrouillage.

5. Machine à café conforme à l'une des revendications précédentes,
**caractérisée en ce que**
le porte-filtre (6) comprend une poignée (8) sur laquelle est monté l'élément d'actionnement (9).

6. Machine à café conforme à l'une des revendications précédentes,
**caractérisée en ce que**
le support (7) du porte-filtre (6) est monté dans la zone inférieure du porte-filtre (6) à proximité de la sortie (14).

7. Machine à café conforme à l'une des revendications précédentes,
**caractérisée en ce que**
le support (7) est réalisé sous la forme d'une barre de retenue sur laquelle peut être verrouillé le porte-filtre (6).

8. Machine à café conforme à la revendication 7,
**caractérisée en ce que**
la barre de retenue comporte un logement de réception (73) essentiellement en forme de V d'une saillie (60, 61) du porte-filtre (6).

9. Machine à café conforme à la revendication 8,
**caractérisée en ce que**
la saillie (60, 61) du porte-filtre (6) peut être introduite par glissement dans le logement de réception en forme de V (73) par encliquetage du mécanisme de verrouillage (20).

10. Machine à café conforme à l'une des revendications précédentes,
**caractérisée en ce que**
le porte-filtre (6) comporte, côté fond, un bord en saillie (60, 61, 62, 63) pouvant être déposé de façon stable sur une surface plane.

11. Machine à café conforme à l'une des revendications précédentes,
**caractérisée en ce que**
l'élément d'actionnement (9) est réalisé intégralement avec au moins un verrou (21) du mécanisme de verrouillage (20).

12. Machine à café conforme à l'une des revendications précédentes,
**caractérisée en ce que**
le verrou (21) est monté pivotant sur le porte-filtre (6).

13. Machine à café conforme à l'une des revendications précédentes,
**caractérisée en ce que**
l'élément d'actionnement (9) est relié au verrou (21) par au moins une tige flexible (24).

14. Machine à café conforme à l'une des revendications précédentes,
**caractérisée en ce qu'**
il est prévu une soupape (15) pouvant être fermée sur le porte-filtre (6) au niveau de la sortie (14).
